# EUROPEAN PATENT SPECIFICATION

(11) **EP 3 336 065 B1**
(45) Date of publication and mention of the grant of the patent: **27.05.2020**
(21) Application number: 16382613.4
(22) Date of filing: 16.12.2016
(51) Int. Cl.: C02F 3/00, C02F 3/30

(54) **A PROCESS AND A SYSTEM FOR AUTOMATICALLY CONTROLLING A NITRIFICATION-DENITRIFICATION PROCESS USING THE REDOX POTENTIAL**
VERFAHREN UND SYSTEM ZUR AUTOMATISCHEN STEUERUNG EINES NITRIFIKATIONS-DENITRIFIKATIONSVERFAHREN UNTER VERWENDUNG DES REDOXPOTENTIALS
PROCÉDÉ ET SYSTÈME DE COMMANDE AUTOMATIQUE D'UN PROCESSUS DE NITRIFICATION-DÉNITRIFICATION EN UTILISANT DU POTENTIEL REDOX

(43) Date of publication of application: 20.06.2018
(73) Proprietor: SUEZ Groupe, 92040 Paris la Défense Cedex (FR)
(72) Inventor: MANZANO RAMIREZ, Josep, 08790 Gelida (ES); POCH PALOU, Maurici, 08006 Barcelona (ES); ROUGÉ, Philippe, 08013 Barcelona (ES); POCH ESPALLARGAS, Manuel, 17001 Girona (ES)
(74) Representative: Sugrañes Patentes y Marcas

(56) References cited:
- EP-A1- 0 396 057
- EP-A1- 3 028 998
- JP-A- 2002 001 388
- US-A- 5 582 734
- US-B2- 8 323 498
- KIM H ET AL: "PH AND OXIDATION-REDUCTION POTENTIAL CONTROL STRATEGY FOR OPTIMIZATION OF NITROGEN REMOVAL IN AN ALTERNATING AEROBIC-ANOXIC SYSTEM", RESEARCH JOURNAL OF THE WATER POLLUTION CONTROL FEDERATION, WATER POLLUTION CONTROL FEDERATION, ALEXANDRIA, VA, US, vol. 73, no. 1, 1 January 2001 (2001-01-01), pages 95-102, XP001043713, ISSN: 1047-7624
- MARTN DE LA VEGA P T ET AL: "New contributions to the ORP & DO time profile characterization to improve biological nutrient removal", BIORESOURCE TECHNOLOGY, ELSEVIER BV, GB, vol. 114, 13 March 2012 (2012-03-13), pages 160-167, XP028422563, ISSN: 0960-8524, DOI: 10.1016/J.BIORTECH.2012.03.039 [retrieved on 2012-03-21]
- FATONE F ET AL: "Removal of nutrients and micropollutants treating low loaded wastewaters in a membrane bioreactor operating the automatic alternate-cycles process", DESALINATION, ELSEVIER, AMSTERDAM, NL, vol. 183, no. 1-3, 1 November 2005 (2005-11-01), pages 395-405, XP027691837, ISSN: 0011-9164 [retrieved on 2005-11-01]

## Description

### Technical filed of the invention

The present invention relates to a process and a system for automatically controlling a water treatment process in a matrix of water, specially adapted to sequentially activate and deactivate control aerations means in order to promote at least organic matter removal and nitrification; and denitrification stages, respectively, in the water.

### Background of the invention

The necessity to achieve carbon, nitrogen and phosphorous removal in wastewater is essential to achieve the level of sufficient water quality for the uses defined in modern Directives or Regulations.

Aeration, sludge retention time and external carbon source addition have been identified as effective control parameters for on-line optimization of biological nitrogen removal from activated sludge systems. In low-loaded activated sludge, controlling aeration periods, based on air supply regulation, is a key factor to enhance the biological nitrogen removal.

However, many small Waste Water Treatment Plants, WWTP, <40.000 population equivalent, have no aeration control procedures implemented, showing high ratios of energy consumption, higher than or equal to 0.6 kWh/m³; or present basic control procedures, on/off, that do not allow operating the biological treatment in an efficient way.

This invention aims at enhancing the biological nitrogen removal using a simple, low-cost and easy to operate control based on air supply regulation.

Several researches have studied the potential use of Oxidation Reduction Potential measurement, ORP, to control the aeration and specifically to alternate oxic and anoxic phases in the mass of water under treatment.

During the oxic phase, the injection of oxygen as air or pure oxygen promotes the oxidation of carbon to carbon dioxide, CO₂, and ammonium ions, NH4+, to nitrate, NO3-, by specific bacteria. The ammonium ions are first transformed to nitrite, NO2-, by ammonia oxidising bacteria, AOB, then nitrite are converted into nitrate by nitrites oxidising bacteria, NOB. This phase promotes nitrification.

During the anoxic phase, the aeration of the reactor is stopped. Nitrate is then reduced into nitrite, and nitrite is successively reduced into non-polluting nitrogen gas, N2, which is eliminated in the atmosphere. This phase promotes denitrification.

The extension of the anoxic phase leads to anaerobic phase, allowing for phosphorous removal or dephosphatation.

Some authors described methods based on the use of ORP absolute values.

In this sense, the patent document ES 2361209 describes how, when subjecting the mass of water to anoxic conditions, when a fixed low level of ORP is reached, aeration is switched on until a reference value in Dissolved Oxygen, DO, is reached.

In other proposals, Heduit, 1989; Charpentier et al., 1989, when a fixed low level is reached, aeration is switched on, and stopped when a fixed high level is obtained.

One drawback of such proposals is that due to operational problems as wear of electrodes, drift of the signals, and so on, the high and low reference values must be continuously adjusted making the system unreliable. This invention aims also at overcoming this drawback.

Additionally, the processes based on the use of this type of reference values are not flexible in response to flow variations and especially to quality variations in the influent. It is another objective of the invention a more versatile process, that is able to guarantee both sufficient dissolved oxygen to achieve nitrification and an anoxic stage to achieve denitrification in tune with the variations in the influent.

Technologies using relative ORP changes with time are also known. They seem to give a better control but are mainly used to stablish and correct predefined aeration anoxic times.

An example is the solution described in EP 0703194 according to which the ORP is monitored and during the aeration phase, if the ORP value rapidly exceeds an absolute reference value then the biological medium is assumed to be fully oxidized and to require little oxygen. It is therefore not necessary to perform aeration for long and the operating time of the aeration means is limited to a specific time. During a non-aeration phase, if ORP rapidly reaches a minimum or "floor" absolute value, then the aeration means are automatically put back into operation.

In EP 0703194 the ORP is continuously measured and the first derivative thereof is calculated. When the derivative tends towards zero, the derivative and the value of the oxidation-reduction potential are correlated to determine whether aeration should be started, continued, or stopped. The process according to EP 0703194 therefore uses ORP absolute reference values, which should be revised upon flow and quality changes in the influent. Additionally, the ORP value could vary in time, sensors subjected to drift, and between facilities which difficulties the implementation of this strategy with guarantees.

Other recent proposals using relative ORP changes with time have been appeared.

The patent document EP 3028998 describes a method comprising cyclically subjecting a mass of water to aeration and non-aeration phases but preferably to promote nitrification and denitrification over nitrite, which allows suppressing N2O production that constitutes a major contribution to greenhouse gas production.

This method implies suppressing the second step of nitrification, the conversion of nitrites into nitrates, and ammonia is thus converted into nitrite, but not into nitrate. Further, the method is intended to be applied in a sequential batch reactor (SBR) and therefore would not be suitable for conventional continuous stirred tank reactors or continuous plug flow reactors and is required partial nitrified effluent with a ratio ammonium to nitrate 50:50. Indeed, the ammonium ions content of the effluent to be treated is determined and the supplying of effluent is stopped when said ammonium ions content is greater than a threshold value.

The method according to EP 3028998 comprises monitoring the DO and the ORP values within the reactor and calculating the DO first derivative dDO/dt and the ORP second derivative d2ORP/dt2 to respectively deactivate and activate the aeration means when they reach associated first and second reference threshold values. According to EP 3028998, the use of derivatives signals allows the system to be relatively insensitive to possible drift of DO and ORP absolute values due to calibration default.

However, this procedure could only be applied in SBR or similar, operating in discontinuous mode, because it requires to perform supplying and withdrawal steps. An objective of the invention is to perform nitrification-denitrification over nitrite, not nitrate, limiting nitrite oxidizing bacteria growth (NOB) due to the simultaneous effects of ammonium inhibition, substrate privation and temperature. These three parameters are not possible to be controlled in full-scale WWTPs so the implementation of the proposed method is not realistic.

Additionally, according to EP 3028998 the first threshold value is determined by carrying out preliminary tests, or by calculating the optimal first threshold in order to have optimal nitrification performances and minimal N2O emissions based in particular on the features of the reactor and of the effluent to be treated. So, different first threshold values have to be used for different effluents. Equally, the second threshold value is also determined by carrying out preliminary tests, or by calculating the optimal second threshold in order to have optimal denitrification performances and minimal N2O emissions based in particular on the features of the reactor and of the effluent to be treated. Again, different second threshold values have to be used for different effluents.

Other proposals combining PH measurements with ORP are dismissed because the end of nitrification is identified by low variation of PH in the reactors and this requires from high-resolution measurements and the PH sensor noise and resolution does not allow achieving this non-well-controlled conditions. Further in some cases it requires more than three PH sensors; it is not possible to achieve partial oxidation of ammonium.

In "PH and oxidation-reduction potential control strategy for optimization of nitrogen removal in an alternating aerobic-anoxic system", Research Journal of the Water Pollution Control Federation, Alexandria, VA, US, vol. 73, n°.1, 1 January 2001, pages 95-102, XP001043713, ISSN: 1047-7624 a similar approach to that of the preamble of the claim 1 is used for detecting a nitrate knee that triggers the end of the nitrification stage, this is to say, the activation of the aeration means.

### Description of the invention

The process of the invention, as described in claim 1, is intended for automatically controlling a water treatment process, specifically when the water comprises carbon and nitrogen, for example in the form of ammonium. The water treatment process comprises subjecting the water to successive working cycles each comprising at least a nitrification or oxic stage (carbon and ammonium oxidation) and a denitrification or anoxic stage (nitrate reduction).

It is characteristic of the process of the invention that it further comprises, in a working cycle, activating aeration means causing aerobic carbon removal and nitrification of the water during the nitrification or oxic stage; deactivating aeration means causing anoxic denitrification of the water during the denitrification or anoxic stage; dynamically measuring at least a redox potential (ORP) of the water; and calculating a second derivative value d2ORP/dt2 of the ORP from the beginning and during the denitrification stage, this is to say with the aeration means deactivated.

In the process of the invention, the aeration means are activated to end the denitrification stage of the working cycle and to begin a further nitrification stage of a following working cycle only once the d2ORP/dt2 of the ORP reaches at least a third zero value during the said denitrification stage.

This process allows carrying out anoxic control by identifying a Nitrate Knee Point (NKP) indicative of that a total conversion of nitrate to nitrogen gas (N2) is achieved. To detect the NKP, Redox Inflection Points (IPs) are detected and evaluated but a third IP is selected as the NKP.

It is therefore necessary to dynamically measure the redox potential (ORP) during a cycle, which means either to measure its value in continuous or at narrow intervals to detect its instant tendencies. The narrower the said intervals the greater can be the precision of the order that will trigger the beginning of the aerobic stage of the following working cycle.

The invention takes advantage of an observed behavior of the ORP during a complete nitrification-denitrification cycle in full-scale WWTPs, not in pilot-scale plants, fed with domestic wastewater. This behavior revealed a typical profile with three IPs during the denitrification stage, the third one linked to the disappearance of nitrates.

The invention is thus completely free from having to specify absolute values and also from ORP drift as only the shape of the curves is important.

According to the invention, the aeration means are activated to end the denitrification stage of a working cycle and to begin a nitrification stage of a following working cycle only once the d2ORP/dt2 of the ORP reaches at least a third zero value during the said denitrification stage. Thus, the invention envisages that the aeration means are activated at the instant when the d2ORP/dt2 of the ORP reaches at least the said third zero value or at an instant afterwards.

In this sense, it is particularly advantageous to take account of earlier events to further adjust the duration of the anoxic stage of a working cycle. Specifically, once the NKP is detected additional time off T is applied before activating the aeration means to begin the nitrification stage of the following cycle.

So that, in the process according to the present invention the process comprises the determination of the residual carbon and ammonium in the water immediately after the aeration means are deactivated by dynamically measuring the Dissolved Oxygen (DO) in the water. At least in one working cycle, the first derivative value dDO/dt of the Disolved Oxygen (DO) is calculated during the denitrification stage immediately after the aeration means are deactivated; and once the d2ORP/dt2 reaches at least the third zero value the aeration means are not activated to begin the nitrification stage of the next working cycle before a period T has elapsed, this period T being function of the value of the first derivative value of the DO calculated at the beginning of the denitrification step of the same working cycle.

Thus, the estimation of the oxygen consumption velocity at the beginning of a denitrification stage is used to decide whether it is advantageous to prolong the anoxic conditions beyond the instant the NKP is detected.

To prolong the said anoxic conditions can lead, for example, to a removal of phosphorous from the wastewater; and to an even more efficient process in terms of energy consumption.

As will be explained hereinafter, a previous set dDO/dt value can be used as a reference value to decide whether an extra period T is to be applied or not.

In an embodiment of the invention, if the dDO/dt is below this reference value "extra time off' is applied and once this "extra time off" is exhausted aeration is turned on.

The instant at which the aeration means are deactivated to begin the denitrification stage of a working cycle it is also of importance. Being the process directed to WWTP Plants, many of which are not equipped with N-NH4 and N-NO3 sensors, in one embodiment the measure of the redox potential (ORP) is used to define both oxic and anoxic times, this is to say the duration of the nitrification and the denitrification stages.

In this case, simple Boolean logic is applied to redox first derivative dORP/dt and second redox derivative d2ORP/dt2 in order to define nitrification or oxic stage, activating the aeration means, and denitrification or anoxic or stage, deactivating the aeration means. This requires a very simple on/off control unit configuration as will be explained later.

This embodiment overcomes some drawbacks associated to the proposals that use the DO value, which can lead to an excess of aeration and therefore to an unnecessary consumption of energy; and gives an opportunity to control the process in partial nitrification modes.

According to another aspect of the invention, a system for automatically controlling a treatment process in a matrix of water comprises a first probe for dynamically measuring the redox potential, ORP, in the water; a programmable control unit in communication with the probe, wherein the control unit receives data from the first probe representing the measurement of the redox potential; and aerator means in communication with the control unit.

In its essence, this system is characterized in that the control unit has processor means able to filter the data received from the first probe; to calculate the second derivate value of the filtered data; to perform a Boolean comparison of the said second derivative value with a predetermined reference value; and to counter the times this second derivative value equals the predetermined reference value; and in that being the aeration means deactivated, the control unit is configured to not activate again the aeration means before the second derivative value equals at least three times the predetermined reference value.

In an embodiment, the processor means are able to calculate the first derivative value dORP/dt of the filtered data associated to the first probe; and to perform a Boolean comparison of the said first derivative value with a predetermined second reference value; and, being the aeration means activated, the control unit is configured to deactivate the aeration means when the first derivative value associated to the first probe equals or tends to zero.

The invention also conceives that the system is provided with a second probe for dynamically measuring the Dissolved Oxygen (DO) in the water; and that the processor means can filter the data received from this second probe and to calculate the first derivate value of the filtered data associated to this second probe. Additionally, being the aeration means deactivated, the control unit is configured to not activate again the aeration means until an extra period T has elapsed once the second derivative value equals at least three times the predetermined reference value, wherein this extra period T is a function of the first derivative value of the filtered data associated to the second probe.

### Brief description of the drawings

Fig. 1, illustrates schematically a Continuous Plug Flow Reactor (CPFR) to show a preferred location for the DO and ORP sensors;
Fig. 2, shows the Redox variation during an entire working cycle comprising of aerobic, anoxic and anaerobic stages;
Fig. 3, shows an entire day of operation (24h) of a plant putting the process into practice according to the invention;
Fig. 4, shows a long-term (9 days) evaluation of the same process; and
Fig. 5, shows Nitrogen (N) variation in the influent and the effluent in a comparison between a conventional ON/OFF control and the process of the invention.

### Detailed description of the invention

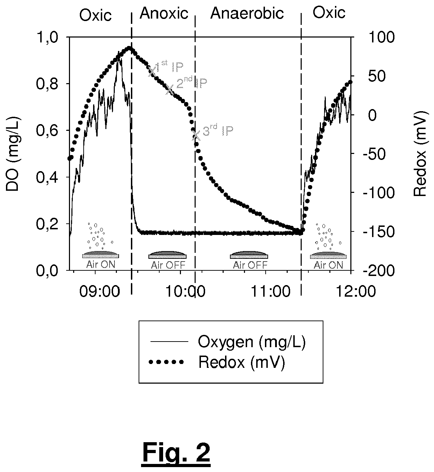

Fig. 2, shows the ORP variation during an entire working cycle comprising oxic, anoxic and anaerobic stages. The graph of Fig. 2 has been obtained from practicing the process of the invention in a commercial plant whose details will be presented later.

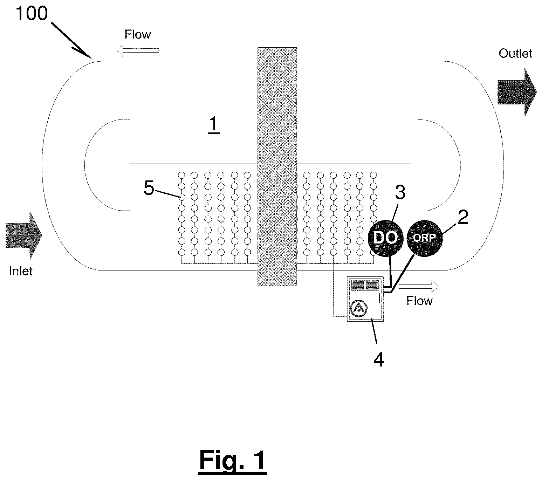

The mentioned stages of oxic, anoxic and anaerobic enabled performing carbon removal, nitrification, denitrification and phosphorous removal, respectively in the same reactor tank of the commercial plant, which is schematically shown in the Fig. 1.

Specifically, the said reactor tank was provided with a DO sensor and a ORP sensor. Both sensors were disposed in the oxic basin but they could be alternatively arranged after the diffusers. The further the sensors are from the diffusers/aerated region the higher the delay in their response will be, which is not recommendable.

Correct location of the DO and ORP sensors allow a good management of aeration and mixing systems, minimizing delay and response time, and allowing correct operation of the biological process.

Naturally, the Fig. 1 serves as an example only. The invention envisages to perform the process also in other type of reactors, such as in a Continuous Stirred Tank Reactor (CSTR). In this particular case the preferred location for the sensors would be also the oxic chamber, avoiding setting them up just over diffusers in order to minimize sensor noise.

The reactor tank was also provided with aeration means and with a programmable control unit in communication with both the DO and ORP sensors and with the aeration means.

The controlled parameters, DO and ORP, were online monitored and collected every 10s. Additionally, both parameters were subjected to data filtering applying a first order filter with the aim of: in the case of DO, to partially remove noise and maintain low delay; and in the case of ORP, to completely remove noise.

The application of a filter in the analog signals provided by sensors is a known technique. This filtering is necessary for the stabilization of the measurement and the reduction of the noise.

In an embodiment, this filter, based on Fourier transform, mathematically processes the signal until a stable and smooth signal is obtained in both time and amplitude of the measurement.

As it will be explained, the use of the ORP sensor allowed controlling oxidation-reduction cycles by changing the reactor tank conditions from oxic to anoxic. During the oxic stage, the aeration means are activated allowing carbon removal and nitrification processes and during the anoxic stage the same aeration means are deactivated leading to a denitrification process.

Specifically, the end of the oxic stage was controlled by indirect measurement of the oxidation rate (carbon and ammonium oxidation) by means of dORP/dt, and particularly by detecting when dORP/dt tended to zero.

In the exemplifying embodiment of the Fig. 2, a dORP/dt set point value was defined in 1,5mV/min, this value indicating a residual presence of reduced forms (carbon and ammonium) and its practical total conversion to oxidised compounds. At this point, aeration means were deactivated leading to anoxic conditions.

In other cases, the set point value for dORP/dt can be "zero" (0), as an indicator that oxidation is fully achieved. However, in the case presented in Fig. 2 this was not required.

The invention envisages selecting a set point value between 0 and 2mV/min.

Oxygen control during the oxic stage is of interest because an optimum control allows maintaining a stable DO concentration in the oxic chamber. Further, it is also required for indirect determination of the ratio of reduced forms (carbon and ammonium) vs. oxidized forms (nitrate). For this reason, a control based on Fuzzy Logic, known in the art, was used precisely to maintain the desired levels of DO.

Basically, this control used the DO data collected by the DO sensor and it was based on a conventional feedback mechanism.

The difference between DO concentration and the DO defined by the operator as "NORMAL" was used to measure an offset; and this DO offset was combined with DO trend (by means of the DO first derivative) and by using a combination of Fuzzy Logic rules a defined instruction for the aeration means was generated with the aim to achieve DO defined as "NORMAL".

Aeration means can easily be actuated, modifying their working frequency or turning on/off individually their blowers, if this is the case for example in 1+1 or 2+1 configurations.

Immediately after the aeration means are deactivated, during a transition period from oxic to anoxic conditions, oxygen decreased to 0ppm (or almost residual). During this period, dDO/dt was measured (this is to say the "oxygen consumption") allowing indirect determination of the residual carbon and ammonium. In the case presented in Figure 2, measured dDO/dt was 0,105mg/minL.

It is of interest to set an absolute value of O₂ to determine the final value for measuring dDO/dt because residual oxygen could still remain or because a DO offset could occur. As an example, this absolute value can be set around 0,15 mg/l.

As Fig. 2 shows, the denitrification (anoxic stage) was well determined by using a profile showing three inflection points (IPs). These IPs were identified by using ORP second derivative d2ORP/dt2. Specifically, the third IP corresponds to the end of denitrification, being total the consumption of N-NO3. This third IP point is the NKP point.

Although the exact value is not a key factor for embodying the invention, in the case illustrated in the Fig. 2 the third IP (and therefore the NKP) was detected at ORP -26mV. Precisely because this specific value could change due to sensor drift, kinetics or as a function of the initial N-NO3 values, the identification of the third IP (by way of calculating the d2ORP/dt2) is used to identify the total consumption of N-NO3.

In the example of Fig. 2, the aeration means were activated again to begin the oxic (nitrification) stage of the following working cycle once the NKP was detected and after an extra period T of "extra-time off" had elapsed, the length of which depends on the previous measured dDO/dt or DO consumption. In this case, operators defined a maximum dDO/dt "set-point" of 0,14mg/L·min to apply this "extra time off" so if the measured dDO/dt was below 0,14mg/L·min a period T of "extra time off" was to be applied, leading to anaerobic conditions and removal of phosphorus from wastewater. Once this "extra time off" was exhausted aeration had to be turned on.

Other possible values for the "set-point" could be selected, but preferably in the range from 0,10mg/L·min to 0,30mg/L·min.

In the case illustrated in Fig. 2, a period T of 60 minutes was applied after denitrification or after the NKP, allowing biological phosphorous removal.

Other possible values for the extra period T could be selected, preferably in the range from 20 min to 90 min.

The invention contemplates using other approaches, such as for example those based on linear, or in non-linear, regressions as an alternative to using previously tabulated dDO/dt values and their corresponding or associated "extra time off" periods T, based on empiric data or gained experience.

The removal of phosphorus from wastewater involves the incorporation of phosphate into TSS and the subsequent removal of those solids. The "extra time off" allowed for anaerobic conditions (wherein nitrate and oxygen are absent) prior to the aeration (turn on aeration). Under these conditions a group of heterotrophic bacteria, called polyphosphate-accumulating organisms (PAO) are selectively enriched in the bacterial community within the activated sludge. The application of the "extra time off" after the NKP detection thus allowed biological phosphorus removal instead of chemical precipitation (most common) and consequent OPEX savings in reactive dosing.

To summarize, the duration of the oxic, anoxic and anaerobic cycles are identified in the Fig. 2, these being delimited by the 41, 47 and 60 minutes, respectively, allowing application of "extra time OFF" not only for phosphorous removal but also for contributing to energy savings.

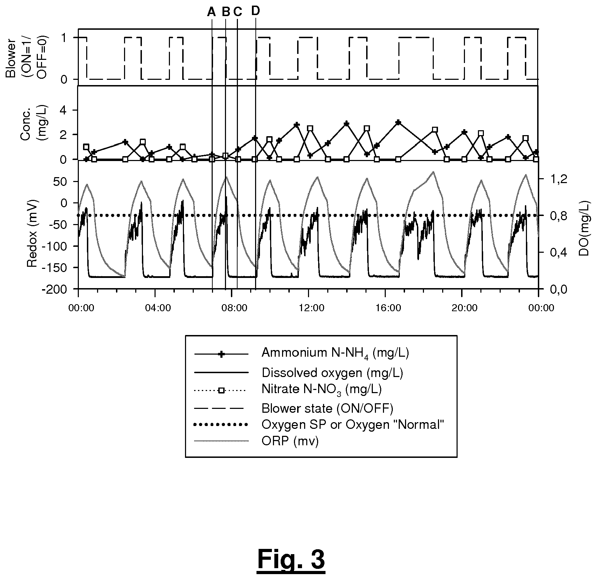

A 24-hour evaluation, from which the detailed cycle shown in the Fig. 2 was extracted, is presented in the Fig. 3. The said Fig. 3 shows that the oxidation (carbon and ammonium removal) and denitrification is systematically achieved during a complete day without accumulation by using first (dORP/dt) and second ORP (d2ORP/dt2) derivative to deactivate and activate, respectively, the aeration means.

In the case reported in the Fig. 3, the deactivation of the aeration means, controlled by dORP/dt to be particularly turned off when the dORP/dt value was below 1,5mV/min, is indicated by point b) in one of the working cycles.

As commented before, once the aeration means were deactivated or turned off, dDO/dt was measured (Fig. 3, point b), this is to say the oxygen consumption velocity was measured.

The complete denitrification, associated with a complete removal of N-NO3, that was controlled by dORP2/dt2 and specifically by identifying the NKP, is indicated by point c) in the same working cycle.

Finally, the beginning of the following working cycle, once the period T after the detection of the NKP has elapsed, is indicated by point d).

The process allowed a good removal of carbonaceous pollutants and N-NH4 and N-NO3 being in this case the 24-hour effluent average of 0,9mg/L and 0,6mg/L, respectively. Additionally, it was demonstrated that long time application of "extra time off" allowed enhancement of PAO culture and biological removal of phosphorus from 10mg/L to a concentration under 5mg/L (expressed as P-PO4).

As previously advanced, the data of Figs. 2 and 3 were obtained from practicing the process of the invention in a commercial WWTP, namely Corvera WWTP, placed in Murcia region (Spain), being the design capacity of the plant 14.285P.E.

This WWTP is based on a basic primary (grid chamber and sand and fat removal) followed by a secondary treatment designed to remove suspended solids, carbon and nutrients (nitrogen and phosphorous).

The secondary treatment is based on a two-carrousel system in parallel with a unitary volume of 1.755 m3 (only one in operation). A carrousel basin is shaped like a racetrack and has a central, longitudinal partition wall. While the wastewater is circulating around the channel, microorganisms break down the organic compounds, nitrogen and phosphorus contained in the wastewater. In practical terms, it could be considered a CPFR. Aeration is supplied to both lines by a common air collector/pipe using two (2) rotatory piston blowers with a nominal power of 22kW. Each reactor is equipped with two (2) submerged flow-boosters propellers ("mixers") to maintain the required minimum flow velocity in the channels with a nominal power of 4 kW.

DO and ORP were measured using Luminescent Dissolved Oxygen (LDO) sensor, LXV416.99.20001, and differential ORP sensor, DRD1R5.99 (Platinum ORP Electrode, Ryton Housing) respectively, both being low maintenance sensors and connected to a SC200 controller, supplied by HACH.

For the evaluation of the process according to the invention, automatic samplers, already available at the inlet and outlet of the WWTP, were used. Although it should have been preferably their installation at the inlet and outlet of the biological reactor, these are not common locations in WWTP and would not allow obtaining ratios comparable with other WWTPs. Laboratory analysis were carried out from each automatic sampler. Parameters and sample frequency is shown in the Table 1.

**Table 1 Followed analysis planning regarding parameters and frequency**

| | **Sampling point** | |
|---|---|---|
| | Inlet | Outlet |
| *COD (mg*/*L)* | 2/week | 2/week |
| *TN (total nitrogen)* | 2/week | 2/week |
| *Ammonium (N-NH₄)* | 2/week | 2/week |
| *Nitrate (N-NO₃)* | - | 2/week |

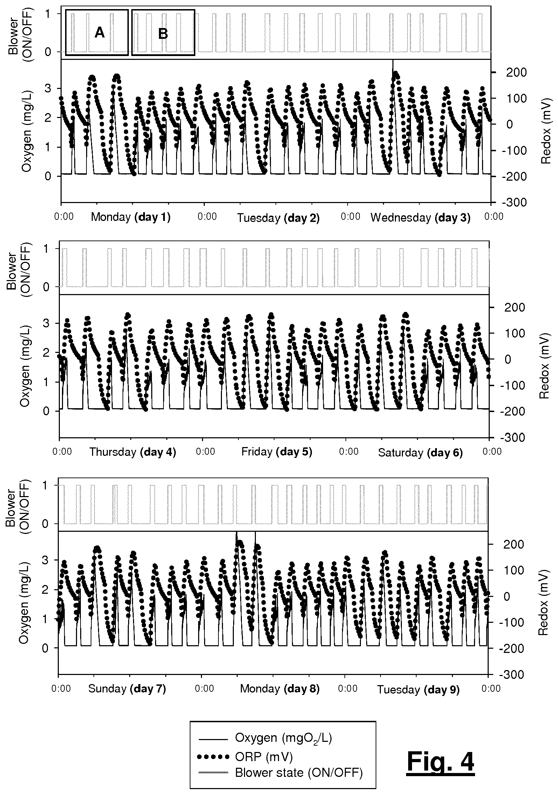

Fig. 4 presents a long-term evaluation, nine (9) days, of the same process already described in reference to the Figs. 2 and 3, showing its robustness and stability. To make it simple, this time only: oxygen (-), ORP (●) and blower state, on/off (-) are presented.

It is of interest to note how aeration was adapted throughout different days. This aspect could be easily evaluated by counting cycles ON/OFF (1/0 respectively): being from day 1 to 3 of 24 cycles, from day 4 to 6 of 22 cycles and from day 7 to 9 of 26 cycles. Moreover, not only the number of cycles changes between days, but also the length of the aeration (ON) between each one (state blower=1). An example is observed in the Fig. 4, sectors A and B, wherein the length of aeration (ON) is shorter in A than in B. This behavior was repeated successively during the 9 days.

The shorter length during first half of the day (A) than during second half (B) is attributed to lower load in A, which supports feasibility of using first ORP derivative to control the oxidation stage.

The long-term evaluation of Fig. 4 also shows the good response of using second ORP derivative (d2ORP/dt2) for detection of NKP.

### Comparative

This section show results for water quality and energy consumption, respectively, operating with previous control strategies (ON/OFF), (FLC) without "extra time off" period and operating according to the invention (FLC with T extra) with "extra time off" period.

The mentioned previous control strategies consist on ON/OFF timer or. Specifically, constant time ON and OFF are defined based on experience leading to oxic and anoxic conditions without considering online data.

ON/OFF control strategy and the invention allow carrying out a safety operation, and despite punctual COD peaks could be observed, in all cases complete reduction of COD was achieved, maintaining effluent below legal limits. Nevertheless, the conventional ON/OFF control strategy requires operating with high oxygen concentrations or with large aeration periods to ensure that the effluent quality is within the legal limits.

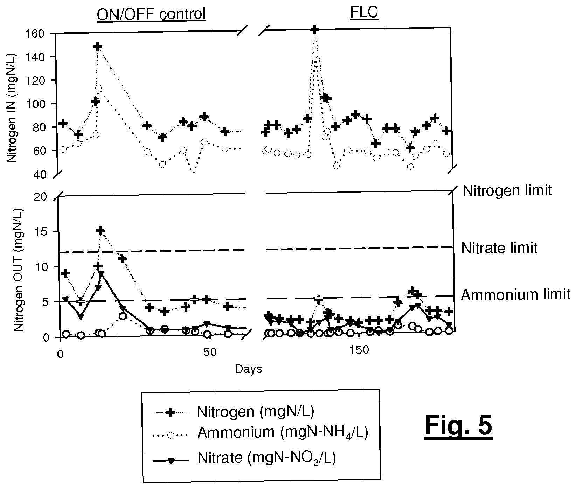

In the case of nitrogen, in all cases it was possible to maintain effluent concentration below legal limits, however the process of the invention demonstrated an increased robustness reducing influent peaks and allowing improve process safety. This behaviour could be observed comparing effluent response to an influent peak from day 14 (ON/OFF control) and 136 (FLC) as shown in Fig. 5.

Table 2 summarizes average values for Corvera WWTP, regarding the parameters presented below. Similar removal yields were obtained in all the cases; nevertheless, the process of the invention allowed improving the denitrification.

Moreover, measured effluent concentration obtained for COD, TN and N-NH4 (reduced compounds) and N-NO3 (oxidised compounds) confirmed the good results when operating the plant according to the invention.

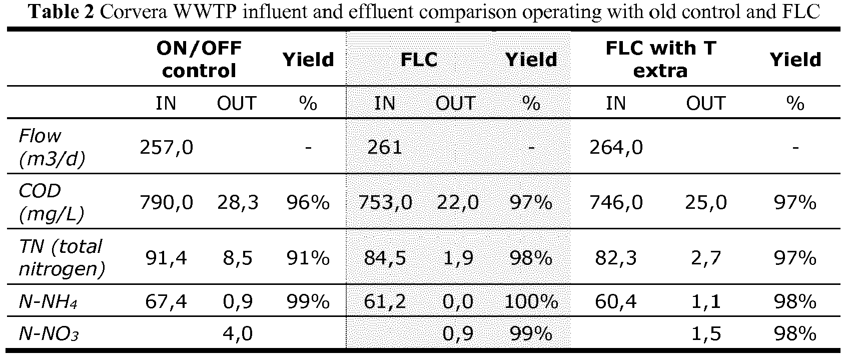

The implementation of the process of the invention also allowed a reduction of the specific aeration energy consumption (in kWh) and the system optimization regarding discharge limits as it is shown in Table 3.

**Table 3 WWTP energy consumption ratios comparison operating with ON/OFF and FLC (without and with T extra application)**

| **Control mode** | **kWh** | **kWh/kgCODr** | **kWh/kgTNr** |
|---|---|---|---|
| ON/OFF | 118 | 0,60 | 5,54 |
| FLC (savings) | 82 (30%) | 0,43 (28%) | 3,82 (31%) |
| FLC - with T extra (savings) | 78 (34%) | 0,41 (32%) | 3,70 (33%) |

## Claims

1. A process for automatically controlling a water treatment process, said water comprising nitrogen and the water treatment process comprising subjecting the water to successive working cycles each comprising at least a carbon oxidation and nitrification stage; and a denitrification stage, the process further comprising in a working cycle
- activating aeration means causing aerobic carbon oxidation and nitrification of the water during the nitrification stage,
- deactivating aeration means causing anoxic denitrification of the water during the denitrification stage,
- dynamically measuring at least a redox potential, ORP, of the water, and
calculating a second derivative value d2ORP/dt2 of the ORP from the beginning and during the denitrification stage, this is to say with the aeration means deactivated, wherein the aeration means are activated to end the denitrification stage of the working cycle and to begin a further nitrification stage of a following working cycle only once the d2ORP/dt2 of the ORP reaches at least a third zero value during the said denitrification stage, the process being **characterized in that** it further comprises the determination of the residual carbon and ammonium in the water after the aeration means are deactivated by measuring the oxygen consumption; and **in that** the aeration means to begin the further nitrification stage of the following working cycle are not activated to begin the nitrification stage of the next working cycle before an extra period T of "extra-time off", the length of which depends on the previous determined residual carbon and ammonium in the water, has elapsed after the d2ORP/dt2 of the ORP reaches at least a third zero value during the denitrification stage,
wherein to measure the oxygen consumption in a working cycle the first derivative value dDO/dt of the Disolved Oxygen DO is calculated during the denitrification stage immediately after the aeration means are deactivated; the extra period T being thus function of the value of the said first derivative value of the DO calculated at the beginning of the denitrification step of the same working cycle.

2. A process according to the claim 1, **characterized in that** an absolute value of O₂ is set to determine the final value for measuring dDO/dt, this absolute value being from 0,1mg/l to 0,2 mg/l.

3. A process according to the claim 2, **characterized in that** the absolute value of O₂ is 0,15 mg/l.

4. A process according to the claim 1, **characterized in that** a maximum dDO/dt set-point is stablished to apply the extra period T and that only if the measured dDO/dt is below this maximum dDO/dt set-point the extra period T is applied.

5. A process according to the claim 4, **characterized in that** the maximum dDO/dt set-point is selected from 0,10mg/L·min to 0,30mg/L·min.

6. A process according to anyone of the claims 1 to 5, further comprising
- calculating a first derivative value dORP/dt of the ORP during the nitrification stage of a working cycle, this is to say with the aeration means activated; and
- deactivating the aeration means to begin the denitrification stage of the same working cycle when the mentioned first derivative value dORP/dt of the ORP reaches or tends to a zero value.

7. A system (100) for automatically controlling a treatment process in a matrix of water (1) comprising a first probe (2) for dynamically measuring the redox potential, ORP, in the water; a programmable control unit (4) in communication with the first probe (2), wherein the control unit receives data from the first probe representing the measurement of the redox potential; and aerator means (5) in communication with the control unit (4), wherein
- the control unit (4) has processor means adapted to filter the data received from the first probe (2); to calculate the second derivate value of the filtered data; to perform a Boolean comparison of the said second derivative value with a predetermined reference value; and to counter the times this second derivative value equals the predetermined reference value; and wherein
- being the aeration means (5) deactivated, the control unit (4) is configured to not activate again the aeration means (5) before the second derivative value equals at least three times a predetermined reference value that is zero, the system being **characterized in that** it further comprises a second probe (3) for dynamically measuring the Dissolved Oxygen, DO, in the water, wherein
- the processor means are adapted to filter the data received from the second probe (3); and to calculate the first derivate value of the filtered data associated to the second probe (3); and **in that**
- being the aeration means (5) deactivated, the control unit (4) is configured to not activate again the aeration means (5) until an extra period T has elapsed once the second derivative value equals at least three times the predetermined zero reference value, wherein this extra period T is a function of the first derivative value of the filtered data associated to the second probe (3).

8. The system (100) according to the claim 7, further **characterized in that**
- the processor means are able to calculate the first derivative value of the filtered data associated to the first probe (2); and to perform a Boolean comparison of the said first derivative value with a predetermined second reference value; and **in that**
- being the aeration means (5) activated, the control unit is configured to deactivate the aeration means (5) when the first derivative value associated to the first probe (2) equals or tends to zero.

## Patentansprüche

1. Verfahren zur automatischen Steuerung eines Wasserbehandlungsverfahrens, wobei das genannte Wasser Stickstoff umfasst und wobei das Wasserbehandlungsverfahren das Unterziehen des Wassers zu aufeinanderfolgenden Arbeitszyklen umfasst, wobei jeder mindestens eine Kohlenstoffoxidations- und Nitrifikationsphase; und eine Denitrifikationsphase umfasst, wobei das Verfahren in einem Arbeitszyklus zusätzlich Folgendes umfasst:
- das Aktivieren von Belüftungsmitteln, sodass die aerobe Kohlenstoffoxidation und Nitrifikation des Wassers während der Nitrifikationsphase hervorgerufen werden,
- das Deaktivieren von Belüftungsmitteln, sodass die anoxische Denitrifikation des Wassers während der Denitrifikationsphase hervorgerufen wird,
- das dynamische Messen mindestens eines Redoxpotentials, ORP, des Wassers, und
das Berechnen eines zweiten Ableitungswertes d2ORP/dt2 des ORP vom Anfang und während der Denitrifikationsphase, das heißt mit den Belüftungsmitteln deaktiviert, wobei die Belüftungsmittel aktiviert werden, um die Denitrifikationsphase des Arbeitszyklus zu beenden und um eine zusätzliche Nitrifikationsphase eines folgendes Arbeitszyklus zu beginnen, nur wenn der d2ORP/dt2 des ORP mindestens einen dritten Nullwert während der genannten Denitrifikationsphase erreicht, wobei das Verfahren **dadurch gekennzeichnet ist, dass** es zusätzlich das Bestimmen des restlichen Kohlenstoffes und Ammonium im Wasser nachdem die Belüftungsmittel deaktiviert werden umfasst, indem der Sauerstoffverbrauch gemessen wird; und dass die Belüftungsmittel, zum Anfangen der zusätzlichen Nitrifikationsphase des folgenden Arbeitszyklus nicht aktiviert werden, um die Nitrifikationsphase des nächsten Arbeitszyklus zu beginnen, bevor ein extra Zeitraum T von "extra Ausfallzeit", dessen Länge von zuvor bestimmten restlichen Kohlenstoff und Ammonium im Wasser abhängt, abgelaufen ist, nachdem der d2ORP/dt2 des ORP mindestens einen dritten Nullwert während der Denitrifikationsphase erreicht,
wobei, um den Sauerstoffverbrauch in einem Arbeitszyklus zu messen, der erste Ableitungswert dDO/dt des Gelöstsauerstoffes während der Denitrifikationsphase berechnet wird, sofort nachdem die Belüftungsmittel deaktiviert werden; und wobei somit der extra Zeitraum T vom Wert des genannten ersten Ableitungswertes des DO abhängt, welcher am Anfang des Denitrifikationsschrittes des gleichen Arbeitszyklus berechnet wurde.

2. Verfahren nach Anspruch 1, **dadurch gekennzeichnet, dass** ein Absolutwert von O₂ festgelegt wird, um den Endwert zum Messen von dDO/dt zu bestimmen, wobei dieser Absolutwert zwischen 0,1 mg/l und 0,2 mg/l beträgt.

3. Verfahren nach Anspruch 2, **dadurch gekennzeichnet, dass** der Absolutwert von O₂ 0,15 mg/l beträgt.

4. Verfahren nach Anspruch 1, **dadurch gekennzeichnet, dass** ein maximaler dDO/dt Sollwert festgestellt wird, um den extra Zeitraum T anzuwenden und dass nur wenn der gemessene dDO/dt unter diesem maximalen dDO/dt Sollwert liegt, der extra Zeitraum T angewendet wird.

5. Verfahren nach Anspruch 4, **dadurch gekennzeichnet, dass** der maximale dDO/dt Sollwert aus 0,10 mg/l·min bis 0,30 mg/l·min ausgewählt wird.

6. Verfahren nach einem der Ansprüche 1 bis 5, zusätzlich umfassend
- das Berechnen eines ersten Ableitungswertes dORP/dt des ORP während der Nitrifikationsphase eines Arbeitszyklus, das heißt mit den Belüftungsmitteln aktiviert; und
- das Deaktivieren der Belüftungsmittel um die Denitrifikationsphase des gleichen Arbeitszyklus zu beginnen, wenn der erwähnte erste Ableitungswert dORP/dt des ORP einen Nullwert erreicht oder dazu neigt.

7. System (100) zur automatischen Steuerung eines Behandlungsverfahrens in einer Matrix aus Wasser (1) umfassend eine erste Sonde (2) zum dynamischen Messen des Redoxpotentials, ORP, im Wasser; einer programmierbare Steuereinheit (4) in Verbindung mit der ersten Sonde (2), wobei die Steuereinheit Daten von der ersten Sonde empfängt, welche die Messung des Redoxpotentials darstellen; und Belüftungsmittel (5) in Verbindung mit der Steuereinheit (4), wobei
- die Steuereinheit (4) Verarbeitungsmittel aufweist, welche in der Lage sind die von der ersten Sonde (2) empfangenen Daten zu filtern; den zweiten Ableitungswert der gefilterten Daten zu berechnen; einen Boolean-Vergleich des genannten zweiten Ableitungswertes mit einem vorbestimmten Referenzwert durchzuführen; und die Male zu zählen, dass dieser zweite Ableitungswert dem vorbestimmten Referenzwert gleich ist; und wobei
- wenn die Belüftungsmittel (5) deaktiviert sind, die Steuereinheit (4) dazu ausgebildet ist, die Belüftungsmittel (5) nicht wieder zu aktivieren, bevor der zweite Ableitungswert mindestens dreimal dem vorbestimmten Referenzwert, der Null ist, gleich ist, wobei das System **dadurch gekennzeichnet ist, dass** es
zusätzlich eine zweite Sonde (3) zum dynamischen Messen des Gelöstsauerstoffes, DO, im Wasser umfasst, wobei
- die Verarbeitungsmittel dazu angepasst sind, die von der zweiten Sonde (3) empfangenen Daten zu filtern; und den ersten Ableitungswert der gefilterten Daten, welcher mit der zweiten Sonde (3) assoziiert ist, zu berechnen; und dass
- wenn die Belüftungsmittel (5) deaktiviert sind, die Steuereinheit (4) dazu ausgebildet ist, die Belüftungsmittel (5) nicht wieder zu aktivieren bis ein extra Zeitraum T abgelaufen ist, sobald der zweite Ableitungswert mindestens dreimal dem vorbestimmten Null-Referenzwert gleich ist, wobei dieser extra Zeitraum T vom ersten Ableitungswert der gefilterten Daten, welcher mit der zweiten Sonde (3) assoziiert ist, abhängt.

8. System (100) nach Anspruch 7, zusätzlich **dadurch gekennzeichnet, dass**
- die Verarbeitungsmittel in der Lage sind, den ersten Ableitungswert der gefilterten Daten, welcher mit der ersten Sonde (2) assoziiert ist, zu berechnen; und einen Boolean-Vergleich des genannten ersten Ableitungswert mit einem vorbestimmten zweiten Referenzwert durchzuführen; und dass
- wenn die Belüftungsmittel (5) aktiviert sind, die Steuereinheit dazu ausgebildet ist, die Belüftungsmittel (5) zu deaktivieren, wenn der erste Ableitungswert, welcher mit der ersten Sonde (2) assoziiert ist, gleich Null ist oder dazu neigt.

## Revendications

1. Procédé de commande automatique d'un processus de traitement d'eau, ladite eau comprenant de l'azote et le processus de traitement d'eau comprenant la soumission de l'eau à des cycles de travail successifs, chacun comprenant au moins une étape d'oxydation et de nitrification de carbone ; et une étape de dénitrification, le procédé comprenant en outre dans un cycle de travail
- l'activation de moyens d'aération produisant la nitrification et l'oxydation de carbone aérobique de l'eau pendant l'étape de nitrification,
- la désactivation des moyens d'aération produisant la dénitrification anoxique de l'eau pendant l'étape de dénitrification,
- la mesure dynamique d'au moins un potentiel redox, ORP, de l'eau, et
le calcul d'une valeur de dérivée seconde d2ORP/dt2 de l'ORP à partir du commencement de l'étape de dénitrification et pendant celle-ci, c'est-à-dire avec les moyens de aération désactivés, dans lequel les moyens de aération sont activés pour terminer l'étape de dénitrification du cycle de travail et commencer une étape de nitrification additionnelle d'un cycle de travail suivant seulement une fois que la d2ORP/dt2 de l'ORP atteint au moins une troisième valeur de zéro pendant ladite étape de dénitrification, le procédé étant **caractérisé en ce qu'**il comprend en outre la détermination du carbone et de l'ammonium résiduels dans l'eau après que les moyens de aération soient désactivés en mesurant la consommation d'oxygène ; et **en ce que** les moyens de aération pour commencer l'étape de nitrification additionnelle du cycle de travail suivant ne sont pas activés pour commencer l'étape de nitrification du cycle de travail suivant avant qu'une période supplémentaire T de « pause extra », dont la durée dépende du carbone et de l'ammonium résiduels déterminés précédents dans l'eau, se soit écoulée après que la d2ORP/dt2 de l'ORP ait atteint au moins une troisième valeur de zéro pendant l'étape de dénitrification,
dans lequel pour la mesure de la consommation d'oxygène dans un cycle de travail, la valeur de dérivée première dDO/dt de l'oxygène dissout DO est calculée pendant l'étape de dénitrification immédiatement après que les moyens de aération soient désactivés ; la période supplémentaire T étant ainsi la fonction de la valeur de ladite valeur de dérivée première du DO calculé au début de l'étape de dénitrification du même cycle de travail.

2. Procédé selon la revendication 1, **caractérisé en ce qu'**une valeur absolue de O₂ est établie pour déterminer la valeur finale pour mesurer dDO/dt, cette valeur absolue allant de 0,1 mg/l à 0,2 mg/l.

3. Procédé selon la revendication 2, **caractérisé en ce que** la valeur absolue de O₂ est 0,15 mg/l.

4. Procédé selon la revendication 1, **caractérisé en ce qu'**un point de réglage de dDO/dt maximal est établi pour appliquer la période supplémentaire T et **en ce que** seulement si le dDO/dt mesuré est inférieur au point de réglage de dDO/dt maximal la période supplémentaire T est appliquée.

5. Procédé selon la revendication 4, **caractérisé en ce que** le point de réglage de dDO/dt maximal est choisi de 0,10 mg/l·min à 0,30 mg/l·min.

6. Procédé selon l'une quelconque des revendications 1 à 5, comprenant en outre
- le calcul d'une valeur de dérivée première dORP/dt de l'ORP pendant l'étape de nitrification d'un cycle de travail, c'est-à-dire avec les moyens de aération activés ; et
- la désactivation des moyens de aération pour commencer l'étape de dénitrification du même cycle de travail lorsque ladite valeur de dérivée première dORP/dt de l'ORP atteint ou tend à une valeur de zéro.

7. Système (100) de commande automatique d'un processus de traitement dans une matrice d'eau (1) comprenant une première sonde (2) pour la mesure dynamique du potentiel redox, ORP, dans l'eau ; une unité de commande programmable (4) en communication avec la première sonde (2), dans lequel l'unité de commande reçoit des données de la première sonde représentant la mesure du potentiel redox ; et des moyens d'aération (5) en communication avec l'unité de commande (4), dans lequel
- l'unité de commande (4) a des moyens de processeur adaptés pour filtrer les données reçues de la première sonde (2) ; pour calculer la valeur de dérivée seconde des données filtrées ; pour mettre en oeuvre une comparaison booléenne de ladite valeur de dérivée seconde avec une valeur de consigne prédéterminée ; et pour compter les fois que cette valeur de dérivée seconde équivaut à la valeur de consigne prédéterminée ; et dans lequel
- les moyens d'aération (5) étant désactivés, l'unité de commande (4) est configurée pour ne pas activer à nouveau les moyens d'aération (5) avant que la valeur de dérivée seconde équivaille au moins trois fois à une valeur de consigne prédéterminée qui est zéro, le système étant **caractérisé en ce qu'**il
comprend en outre une seconde sonde (3) pour la mesure dynamique de l'oxygène dissout, DO, dans l'eau, dans lequel
- les moyens de processeur sont adaptés pour filtrer les données reçues de la seconde sonde (3) ; et pour calculer la valeur de dérivée première des données filtrées associées à la seconde sonde (3) ; et **en ce que**
- les moyens d'aération (5) étant désactivés, l'unité de commande (4) est configurée pour ne pas activer à nouveau les moyens d'aération (5) avant qu'une période supplémentaire T se soit écoulée une fois que la valeur de dérivée seconde équivaut au moins trois fois à la valeur de consigne de zéro prédéterminée, dans lequel cette période supplémentaire T est une fonction de la valeur de dérivée première des données filtrées associées à la seconde sonde (3).

8. Système (100) selon la revendication 7, **caractérisé en outre en ce que**
- les moyens de processeur sont aptes à calculer la valeur de dérivée première des données filtrées associées à la première sonde (2) ; et à mettre en œuvre une comparaison booléenne de ladite valeur de dérivée première avec une seconde valeur de consigne prédéterminée ; et **en ce que**
- les moyens d'aération (5) étant activés, l'unité de commande est configurée pour désactiver les moyens d'aération (5) lorsque la valeur de dérivée première associée à la première sonde (2) équivaut ou tend à zéro.
